# EUROPÄISCHE PATENTANMELDUNG

(11) **EP 3 657 073 A1**
(43) Veröffentlichungstag der Anmeldung: **27.05.2020**
(21) Anmeldenummer: 18207877.4
(22) Anmeldetag: 22.11.2018
(51) Int. Cl.: F23J 13/08, F23L 11/00

(54) **RÜCKSTRÖMSPERRE**

(71) Anmelder: Centrotherm Systemtechnik GmbH, 59929 Brilon (DE)
(72) Erfinder: LIESE, Ralf, 59909 Bestwig- OT Ostwig (DE)
(74) Vertreter: Zenz Patentanwälte Partnerschaft mbB

(57) **Zusammenfassung**

Eine Rückströmsperre (1) für eine Abgasleitung einer Verbrennungseinrichtung umfasst einen Rohrkörper (2), einen Schwebekörper (3), einen innen im Rohrkörper (2) angeordneten Ventilsitz (5) für den Schwebekörper (3) und eine radial innen im Rohrkörper (2) angeordnete Umfangsrinne (7), wobei ein radial innerer Umfangswandabschnitt (8) zumindest als ein Abschnitt eines sich in Richtung des Schwebekörpers (3) erstreckender Gasführungskanal (11) mit einem Mündungsumfangsrand (12) ausgebildet ist. Innerhalb der Umfangsrinne (7) ist ein rohrförmig ausgebildeter und den Ventilsitz (5) aufweisender Auftriebskörper (4) angeordnet, der zwischen einer Auftriebs-Position, in welcher der Auftriebskörper (4) zwischen sich und dem Mündungsumfangsrand (12) einen umlaufenden und die Umfangsrinne (7) mit dem Gasführungskanal (11) verbindenden Durchlassspalt (22) ausbildet, und einer den Durchlassspalt (22) verschließenden Sperr-Position in einer axialen Richtung (21) parallel zum radial inneren Umfangswandabschnitt (8) bewegbar ausgebildet ist.

## Beschreibung

Die Erfindung richtet sich auf eine Rückströmsperre für eine Abgasleitung einer Verbrennungseinrichtung, wobei die Rückströmsperre einen in einem vertikalen Abschnitt der Abgasleitung einbaubaren Rohrkörper, einen Schwebekörper, einen innen im Rohrkörper angeordneten Ventilsitz für den durch vertikal aufwärts strömendes Gas von dem Ventilsitz abhebbar ausgebildeten Schwebekörper und eine radial innen im Rohrkörper angeordnete Umfangsrinne aufweist, die von einem radial inneren Umfangswandabschnitt, einem radial äußeren Umfangswandabschnitt und einem Bodenwandabschnitt begrenzt ist, wobei der radial innere Umfangswandabschnitt und der Bodenwandabschnitt innen im Rohrkörper ausgebildet sind und wobei der radial innere Umfangswandabschnitt zumindest als ein Abschnitt eines sich in Richtung des Schwebekörpers erstreckenden Gasführungskanals mit einem Mündungsumfangsrand ausgebildet ist.

Rückströmsperren bekannter Art sind beispielsweise mit einfachen Ventilkörpern oder Klappen ausgestattet, die sich je nach Gasdruck weiter öffnen oder schließen. Die Rückstellung bei bekannten Systemen erfolgt entweder mittels der Gewichtskraft der Klappen oder mit Hilfe von Rückstellelementen, wie beispielsweise Federn.

Eine Rückströmsperre ist zum Beispiel in der DE 199 06 736 C1 beschrieben. Dort befindet sich in einem Rohrkörper ein Schwebekörper mit einem stromaufwärtsgerichteten Führungselement in Form eines zapfenartigen Ansatzes, der an der Innenfläche von Führungsstegen geführt wird, wobei die Führungsstege im Wesentlichen radial nach innen gerichtet an der Innenseite des Rohrkörpers angeordnet sind.

Ferner ist eine Rückströmsperre aus der DE 100 37 967 C1 bekannt. Bei dieser Rückströmsperre weist der Schwebekörper, der durch aufwärts strömendes Abgas von dem Ventilsitz abhebbar ist, mindestens zwei Teilabschnitte auf, wobei jeder nächst-größere Teilabschnitt einen Zusatz-Ventilsitz für den nächst-kleineren Teilabschnitt bildet.

Schließlich ist eine Rückströmsperre der eingangs genannten Art aus der EP 2 461 099 B1 bekannt. Bei dieser Rückströmsperre steht der Umfangsrand des Schwebekörpers radial über den radial inneren Umfangswandabschnitt hervor und weist einen stromaufwärts weisenden Axialansatz auf, der sich bei Aufliegen des zumindest einen Schwebekörpers auf dem Ventilsitz in axialer Richtung stromauf in die Umfangsrinne hinein erstreckt. Wenn sich hierbei die Verbrennungseinrichtung im Ruhezustand befindet, liegt der Schwebekörper auf dem Ventilsitz auf. Flüssigkeit, die stromabwärts vom Schwebekörper gebildet wird, kann durch den Axialansatz des Schwebekörpers in die Umfangsrinne geleitet werden, so dass bei hinreichend angesammelter Flüssigkeit der Axialansatz in die Flüssigkeit eintaucht. Durch das Eintauchen in die angesammelte Flüssigkeit bildet der Axialansatz des Schwebekörpers zusammen mit der Flüssigkeit eine Fluidsperre nach Art eines fluiden Dichtsitzes. Wird eine solche Rückströmsperre innerhalb einer Kaskade von mehreren Verbrennungseinrichtungen verwendet, kann es zum Beispiel bei einer Fehlzündung einer Verbrennungseinrichtung aufgrund des dadurch entstehenden Drucks dazu kommen, dass der Schwebekörper auf den Ventilsitz gedrückt wird und der vorherrschende Druck die angesammelte Flüssigkeit aus der Umfangsrinne herausdrückt, so dass die Sperrwirkung durch den Schwebekörper aufgehoben ist und erst dann wieder gegeben ist, wenn sich Flüssigkeit in der Umfangsrinne angesammelt hat oder von einem Benutzer nachgefüllt wurde. Dabei birgt die Aufhebung der Sperrwirkung die Gefahr, dass Abgas aus der Rückströmsperre austritt und in den Aufstellungsraum einer Verbrennungseinrichtung gelangt, was eine ernsthafte Gefährdung für sich im Aufstellungsraum aufhaltende Personen darstellt.

Der Erfindung liegt die Aufgabe zugrunde, eine Lösung zu schaffen, die auf konstruktiv einfache Weise eine verbesserte und besonders leistungsfähige Rückströmsperre bereitstellt und die darüber hinaus die aus dem Stand der Technik bekannte Gefahr vermeidet.

Bei einer Rückströmsperre der eingangs bezeichneten Art wird die Aufgabe erfindungsgemäß dadurch gelöst, dass zwischen dem radial inneren Umfangswandabschnitt und dem radial äußeren Umfangswandabschnitt ein rohrförmig ausgebildeter und den Ventilsitz ausbildender Auftriebskörper angeordnet ist, der zwischen einer Auftriebs-Position, in welcher der Auftriebskörper zwischen sich und dem Mündungsumfangsrand einen umlaufenden und die Umfangsrinne mit dem Gasführungskanal verbindenden Durchlassspalt ausbildet, und einer den Durchlassspalt verschließenden Sperr-Position in einer axialen Richtung parallel zum radial inneren Umfangswandabschnitt bewegbar ausgebildet ist.

Vorteilhafte und zweckmäßige Ausgestaltungen und Weiterbildungen der Erfindung ergeben sich aus den Unteransprüchen.

Durch die Erfindung wird eine Rückströmsperre zur Verfügung gestellt, welche für sehr hohe Sperrdrücke ausgebildet ist. Bekannte Rückströmsperren aus dem Stand der Technik sind für Sperrdrücke von 500 Pa bis 1000 Pa ausgelegt, wohingegen die erfindungsgemäße Rückströmsperre für höhere Sperrdrücke von bis zu 2500 Pa ausgelegt ist. Bei der erfindungsgemäßen Rückströmsperre hebt im normalen Betrieb der Schwebekörper durch vertikal strömendes Abgas von dem Ventilsitz ab, so dass Abgas von der Verbrennungseinrichtung vertikal durch die Rückströmsperre strömen kann. Erfindungsgemäß ist es nicht erforderlich, dass die nach Art eines Siphons wirkende und mit dem Auftriebskörper zusammenwirkende Umfangsrinne mit einem Fluid gefüllt ist. Denn sollte sich kein Fluid in der Umfangsrinne befinden, dann verschließt der Auftriebskörper den Durchlassspalt, welcher die Umfangsrinne mit dem Gasführungskanal verbindendet. Sollte die Umfangsrinne hingegen mit Fluid gefüllt sein, dann wirken der Auftriebskörper und die Umfangsrinne nach Art eines Siphons zusammen und sorgen dafür, dass Abgas nur durch den Querschnitt strömen kann, welcher von dem vom Ventilsitz abgehobenen Schwebekörper freigegeben wird. Einem Überschuss an Fluid in der Umfangsrinne wird bei der erfindungsgemäßen Rückströmsperre dadurch begegnet, dass überschüssiges Fluid durch den Durchlassspalt hindurch in den Gasführungskanal abgeleitet wird. Es ist folglich keine Ableitung von Fluid aus einer mit dem Außenbereich der Rückströmsperre in Verbindung stehenden Öffnung erforderlich, wie es aus dem Stand der Technik bekannt ist. Entsprechend weist die erfindungsgemäße Rückströmsperre auch keine permanent mit dem Außenbereich in Verbindung stehende Öffnung auf, so dass bei der erfindungsgemäßen Rückströmsperre die Gefahr vermieden ist, dass für bestimmte Betriebsfälle ein von der Verbrennungseinrichtung erzeugtes Abgas aus der Rückströmsperre in den Außenbereich entweichen kann. Beispielsweise ist ein solcher bestimmter Betriebsfall dadurch charakterisiert, dass ein Sperrdruck entgegen der normalen Strömungsrichtung temporär auf die Rückströmsperre wirkt, so dass der wirkende Sperrdruck den Schwebekörper auf den Ventilsitz drückt. Dadurch wirkt gemäß der Erfindung der Sperrdruck auch auf den den Ventilsitz aufweisenden Auftriebskörper, welcher innerhalb der Umfangsrinne entgegen der normalen Strömungsrichtung gedrängt wird. Bei hinreichend hohem Sperrdruck und/oder leerer Umfangsrinne drückt dann der Schwebekörper den Auftriebskörper derart in Richtung des Bodenwandabschnitts, dass der Auftriebskörper auf dem Mündungsumfangsrand aufliegt und den Durchlassspalt verschließt. Dadurch wird zum Beispiel bei einem solchen Betriebsfall im Unterschied zum Stand der Technik vermieden, dass angesammeltes Fluid, welches sich in der Umfangsrinne befindet, aus der Umfangsrinne herausgedrückt und durch den Gasführungskanal abgeleitet werden kann. Mit anderen Worten wird bei einem vorherrschenden Sperrdruck eine Entleerung der mit Fluid gefüllten Umfangsrinne vermieden. Der in der Umfangsrinne bewegbar angeordnete Auftriebskörper passt sich erfindungsgemäß dem Füllstand von Fluid in der Umfangsrinne an und gestattet es darüber hinaus, dass in einem normalen Betrieb überschüssiges Fluid aus der Umfangsrinne abgeleitet werden kann. Insbesondere passt sich der Auftriebskörper gemäß der Erfindung verschiedensten Betriebszuständen an und verhindert in extremen Betriebszuständen, dass angesammeltes Fluid aus der Umfangsrinne herausgedrückt wird. Dabei stellt der Auftriebskörper einen in axialer Richtung bewegbaren Ventilsitz bereit, welcher sich zusammen mit dem Auftriebskörper in axialer Richtung parallel zum radial inneren Umfangswandabschnitt in Abhängigkeit eines Betriebszustandes und/oder der Füllhöhe von Fluid in der Umfangsrinne vertikal bewegen kann und eine entsprechende Position einnimmt. Dadurch, dass die Rückströmsperre zur Ableitung von überschüssigem und in der Umfangsrinne befindlichen Fluid keinen permanent geöffneten Durchlass zum Außenbereich der Rückströmsperre aufweist, kann auch kein Abgas aus der Rückströmsperre in den Außenbereich entweichen. Durch die Erfindung wird eine wartungsarme bis wartungsfreie Rückströmsperre zur Verfügung gestellt, die auch bei ausgetrockneter Umfangsrinne durch ihre konstruktive Ausgestaltung ihre Absperrfunktion beibehält und auch ohne innerhalb der Umfangsrinne befindliche Flüssigkeit ihre Funktionalität beibehält, was insbesondere nach langen Stillstandzeiten der Verbrennungseinrichtung, wie zum Beispiel in den Sommermonaten, von Vorteil ist.

Die Erfindung sieht in Ausgestaltung der Rückströmsperre vor, dass an dem Auftriebskörper innenseitig ein sich radial nach innen erstreckender Umfangssperransatz ausgebildet ist, welcher in der Sperr-Position auf dem Mündungsumfangsrand aufliegend angeordnet ist. Der umlaufende Umfangssperransatz sorgt dabei für eine definierte Blockade und verschließt den Durchlassspalt gasdicht, so dass in der Sperr-Position kein Fluid aus der Umfangsrinne in den Gasführungskanal gelangen kann.

Zur Begrenzung der Auftriebsbewegung des Auftriebskörpers ist in Ausgestaltung der erfindungsgemäßen Rückströmsperre ferner vorgesehen, dass an dem radial inneren Umfangswandabschnitt wenigstens ein Rückhaltearm ausgebildet ist, welcher sich radial nach innen erstreckt und eine Bewegung des Auftriebskörpers aus der Sperr-Position heraus in axialer Richtung über die Auftriebs-Position hinaus blockiert. In der anderen Extremposition, nämlich der Sperr-Position, ist der Auftriebskörper wie auch in der Auftriebs-Position beabstandet zu dem Bodenwandabschnitt angeordnet, wobei der Abstand zwischen Auftriebskörper und Bodenwandabschnitt in der Auftriebs-Position größer ist als in der Sperr-Position.

Sollte die Umfangsrinne vollständig mit Flüssigkeit bzw. Fluid gefüllt sein oder sich bildendes Kondensat die Umfangsrinne zum Überlaufen bringen, so kann darüber hinaus angesammelte Flüssigkeit bzw. Kondensat durch den Durchlassspalt hindurch in den Gasführungskanal gelangen und abgeleitet werden. Hierzu sieht die Erfindung in weiterer Ausgestaltung vor, dass an dem Auftriebskörper ein sich in axialer Richtung erstreckender Umfangssitz ausgebildet ist, welcher der Ventilsitz ist, wobei in der Auftriebs-Position der Umfangssitz zwischen sich und dem Mündungsumfangsrand den umlaufenden Durchlassspalt zwischen der Umfangsrinne und dem Gasführungskanal ausbildet.

Besonders vorteilhaft und konstruktiv günstig ist es, wenn in Ausgestaltung der Erfindung der Auftriebskörper eine Auftriebseinrichtung aufweist, welche bei einem in der Umfangsrinne befindlichen Fluid für den Auftriebskörper eine in Richtung der Auftriebs-Position wirkende Kraft erzeugend ausgebildet ist. Dabei kann das Fluid in der Umfangsrinne angesammeltes Kondensat oder eine von einem Benutzer in die Umfangsrinne gefüllte Flüssigkeit sein.

Die Erfindung sieht in weiterer Ausgestaltung vor, dass der Auftriebskörper eine radial innere Umfangswandung und eine radial äußere Umfangswandung aufweist, wobei die Auftriebseinrichtung als eine zwischen der radial inneren Umfangswandung und der radial äußeren Umfangswandung ausgebildete Auftriebskammer ausgebildet ist. Die radial äußere Umfangswandung und die radial innere Umfangswandung bilden zwischen sich einen Ringspalt aus, welcher an dem dem Bodenabschnitt zugewandten Längsende offen ist und welcher an dem anderen Längsende geschlossen ist. Die in dem Ringspalt vorhandene Luft stellt dabei ein Luftpolster dar und sorgt dabei für den Auftrieb, sobald sich die Umfangsrinne mit einer entsprechenden Menge an Fluid füllt. Solange kein Fluid vorhanden ist und damit kein Auftrieb auf den Auftriebskörper wirkt, ist der Auftriebskörper in der Sperr-Position angeordnet.

Damit sichergestellt ist, dass angesammeltes Fluid auch nur innenseitig durch den Gasführungskanal abgeleitet werden kann, ist in Ausgestaltung der Erfindung vorgesehen, dass sich in axialer Richtung von dem Bodenwandabschnitt aus betrachtet der radial äußere Umfangswandabschnitt über den radial inneren Umfangswandabschnitt hinaus erstreckt. Die axiale Länge des radial äußeren Umfangswandabschnitts ist damit größer als die axiale Länge des radial inneren Umfangswandabschnitts.

Für eine geführte Axialbewegung des Schwebekörpers sieht die Erfindung in weiterer Ausgestaltung vor, dass der Schwebekörper einen sich in axialer Richtung erstreckenden Ansatz aufweist, wobei eine Führungshülse innen im Auftriebskörper ausgebildet ist, in welcher der Schwebekörper in axialer Richtung bewegbar geführt ist.

Zur Spülung der Umfangsrinne und zum Ableiten von angesammeltem Fluid ist es in Ausgestaltung der Erfindung von Vorteil, wenn der radial äußere Umfangswandabschnitt als eine Außenumfangswand des Rohrkörpers ausgebildet ist, wobei die Außenumfangswand eine verschließbar ausgebildete Durchgangsöffnung aufweist. Dadurch, dass der radial äußere Umfangswandabschnitt gleichzeitig die Außenumfangswand des Rohrkörpers ist, lässt sich eine sehr kompakte Bauform der Rückströmsperre erzielen.

Schließlich ist in Ausgestaltung der Erfindung vorgesehen, dass der Schwebekörper wenigstens einen ringförmig ausgebildeten Teilabschnitt und wenigstens einen tellerförmig ausgebildeten Teilabschnitt aufweist, wobei jeder nächst-größere Teilabschnitt einen Zusatz-Ventilsitz für den nächst-kleineren Teilabschnitt bildet. Gegenüber bekannten einstufigen Rückströmsperren ist es somit insbesondere bei Verbrennungseinrichtungen mit großen Abgasströmen möglich, den Öffnungsquerschnitt an kleine Abgasströme, wie sie beispielsweise im Teil-Lastbetrieb auftreten, anzupassen und im Voll-Lastbetrieb zusätzliche Durchtrittsöffnungen für die anfallenden sehr großen Abgasmengen vorzusehen.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Ansicht einer erfindungsgemäßen Rückströmsperre,
Figur 2 eine perspektivische Einzelteildarstellung der erfindungsgemäßen Rückströmsperre aus Figur 1,
Figur 3 eine zum Teil geschnittene Perspektivansicht der erfindungsgemäßen Rückströmsperre,
Figur 4 eine geschnittene Detailansicht der erfindungsgemäßen Rückströmsperre, wobei ein Auftriebskörper der Rückströmsperre in einer Sperr-Position angeordnet ist,
Figur 5 eine geschnittene Detailansicht der erfindungsgemäßen Rückströmsperre, wobei der Auftriebskörper der Rückströmsperre aus der Sperr-Position herausbewegt angeordnet ist,
Figur 6 eine perspektivische Schnittansicht eines Rohrkörpers der erfindungsgemäßen Rückströmsperre,
Figur 7 eine perspektivische Schnittansicht des Auftriebskörpers der erfindungsgemäßen Rückströmsperre,
Figur 8 eine zum Teil geschnittene Frontansicht auf die erfindungsgemäße Rückströmsperre für einen normalen Betriebszustand und eine entsprechende Detailansicht, und
Figur 9 eine zum Teil geschnittene Frontansicht auf die erfindungsgemäße Rückströmsperre für einen gesperrten Betriebszustand und eine entsprechende Detailansicht.

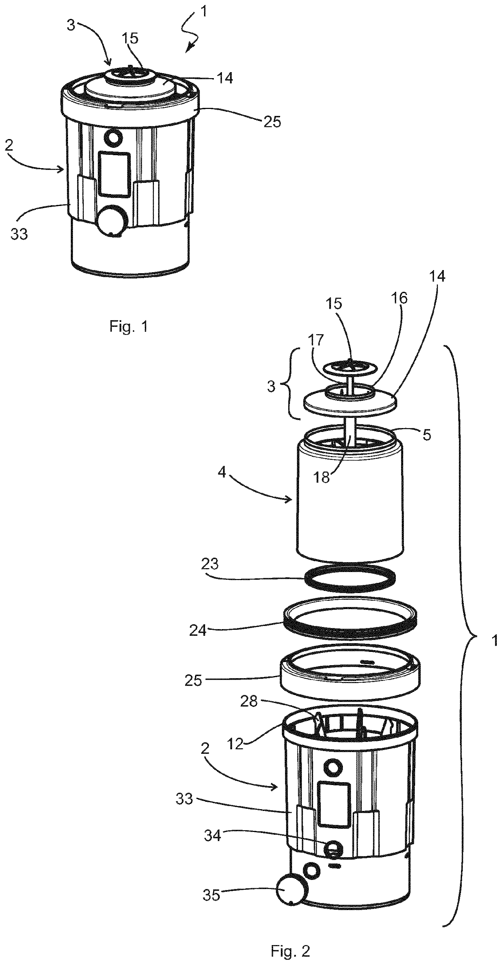

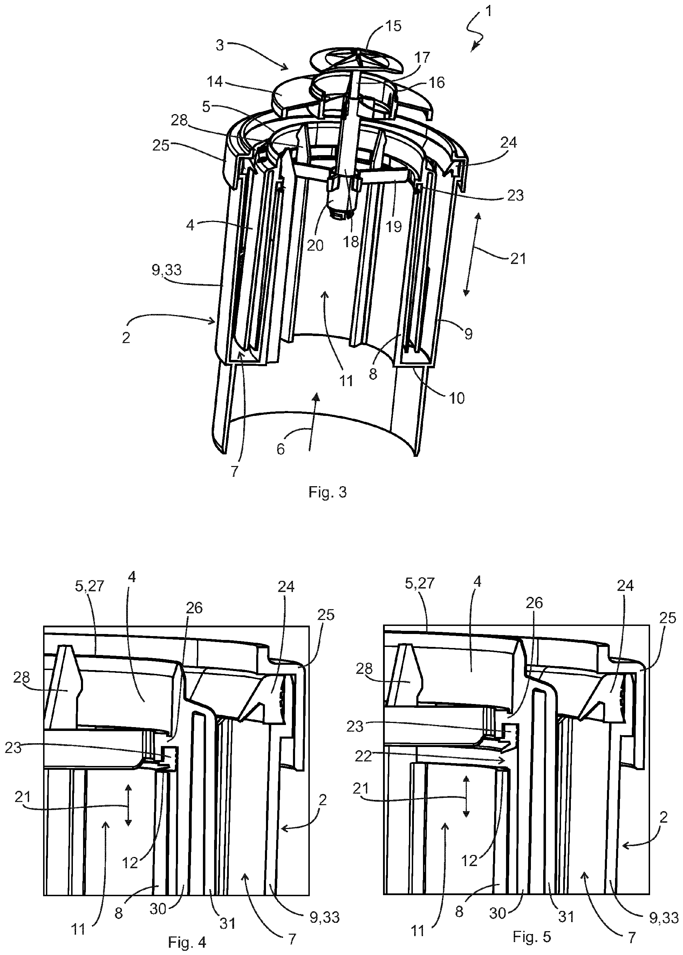

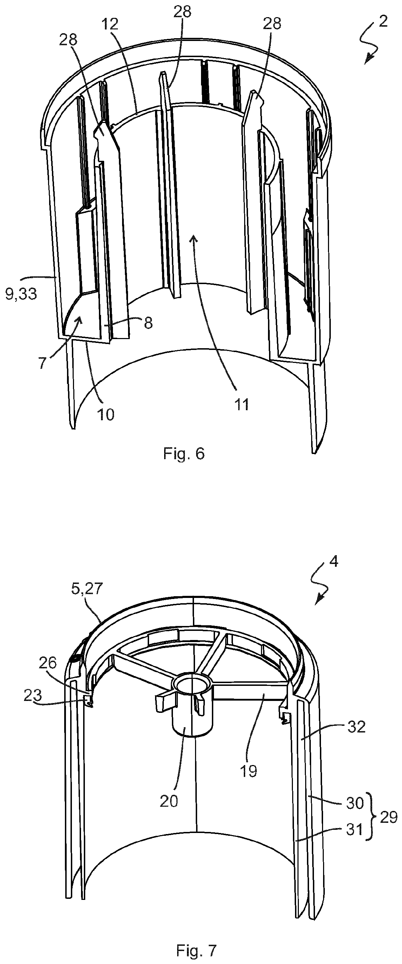

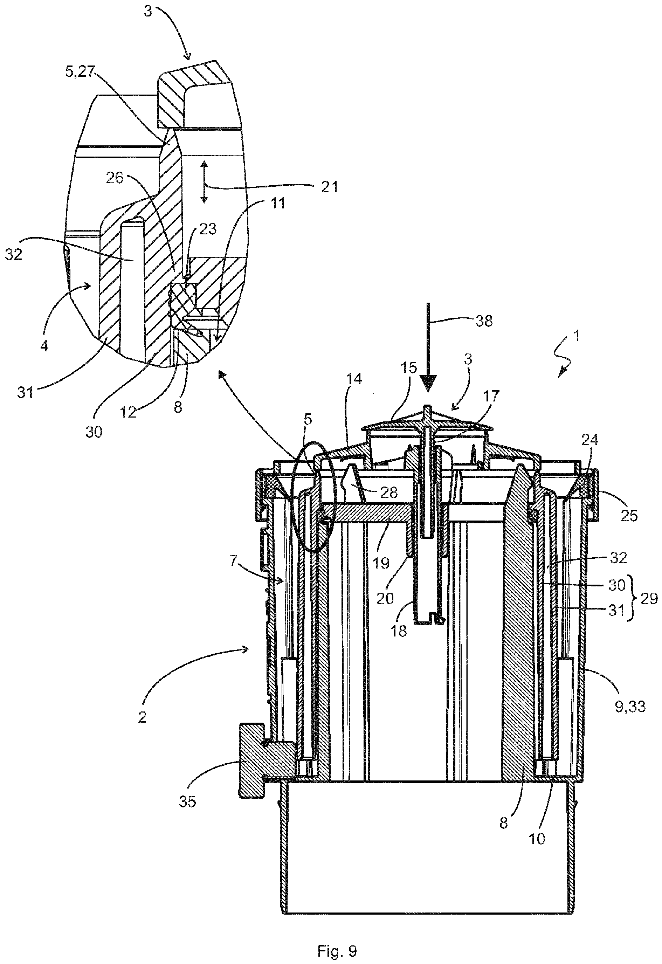

Nachstehend wird die erfindungsgemäße Rückströmsperre 1 einer Abgasleitung einer Verbrennungseinrichtung mit Bezug auf die Figuren 1 bis 9 beschrieben. Die in Figur 3 in einer zum Teil geschnittenen Perspektivansicht dargestellte Rückströmsperre 1 umfasst als für die Erfindung wesentliche Bauteile einen Rohrkörper 2, der in einem vertikalen Abschnitt einer von unten nach oben durchströmten Abgasleitung einbaubar ist, einen an dem Rohrkörper 2 bewegbar angeordneten Schwebekörper 3 und einen innen im Rohrkörper 2 angeordneten und rohrförmig ausgebildeten Auftriebskörper 4. Innen im Rohrkörper 2 ist ein Ventilsitz 5 angeordnet, welcher an dem Auftriebskörper 4 ausgebildet ist und auf welchem der Schwebekörper 3 in seiner Schließposition (siehe zum Beispiel Figuren 4 und 9) aufliegt. Durch ein vertikal bzw. von unten nach oben strömendes Abgas ist der Schwebekörper 3 von dem Ventilsitz 5 stromabwärts (siehe zum Beispiel Pfeil 6 in Figur 3 für die Stromab-Richtung) abhebbar. Der Ausdruck "stromabwärts" bezieht sich dabei auf eine Richtung in Strömungsrichtung des Abgases, wohingegen der Ausdruck "stromaufwärts" die entgegengesetzte Richtung und damit eine der Strömungsrichtung des Abgases entgegengesetzte Richtung bezeichnet. Die Rückströmsperre 1 weist ferner eine stromabwärts offene Umfangsrinne 7 auf, die innen im Rohrkörper 2 ausgebildet ist. Die radial innen im Rohrkörper 2 angeordnete Umfangsrinne 7 ist von einem radial inneren Umfangswandabschnitt 8, einem radial äußeren Umfangswandabschnitt 9 und einem Bodenwandabschnitt 10 begrenzt, wobei in dem dargestellten Ausführungsbeispiel der radial innere Umfangswandabschnitt 8 und der Bodenwandabschnitt 10 radial innen liegend im Rohrkörper 2 ausgebildet sind. Bei dem gezeigten Ausführungsbeispiel sind ferner der radial innere Umfangswandabschnitt 8, der radial äußere Umfangswandabschnitt 9 und der Bodenwandabschnitt 10 mit dem Rohrkörper 2 einstückig ausgebildet, wie es beispielsweise aus Figur 6 ersichtlich ist, die eine Einzelteildarstellung des Rohrkörpers 2 zeigt. Wie ferner zum Beispiel die Figuren 3 und 6 zeigen, ist der radial innere Umfangswandabschnitt 8 zumindest als ein Abschnitt eines sich in Richtung des Schwebekörpers 3 erstreckenden Gasführungskanals 11 ausgebildet, wobei der Gasführungskanal 11 einen Mündungsumfangsrand 12 an einer Endseite aufweist, dessen Mündung von dem Schwebekörper 3 in seiner Schließposition überdeckt und verschlossen ist.

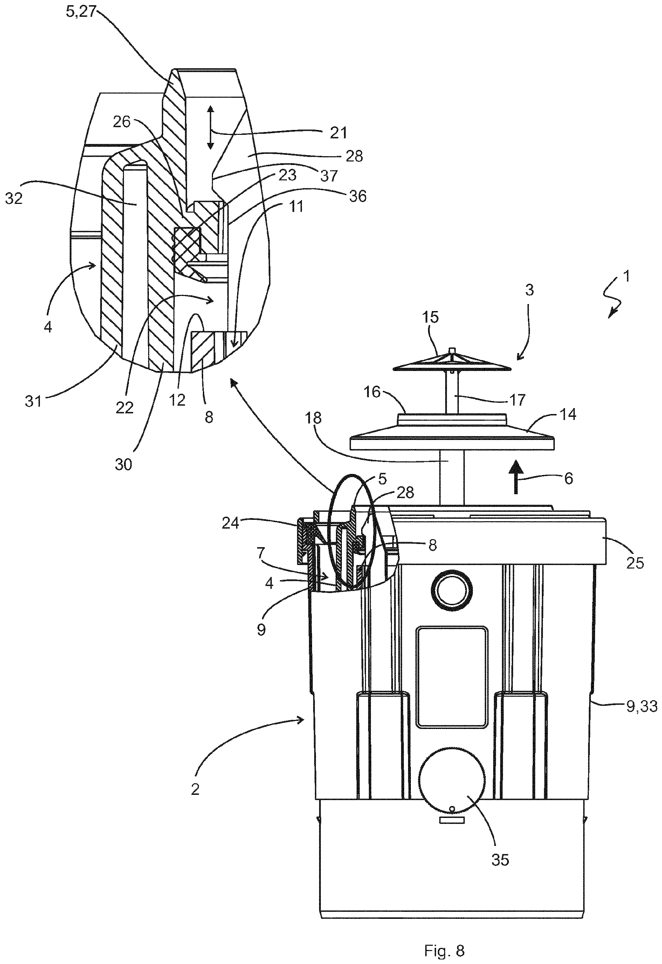

Der Schwebekörper 3 umfasst einen in den Figuren 2, 3 und näher ersichtlichen äußeren Teilabschnitt 14, der ringförmig ausgebildet ist, und einen inneren Teilabschnitt 15, der tellerförmig ausgebildet ist. In Schließposition des Schwebekörpers 3 (siehe Figuren 1 und 9) ruht der äußere Teilabschnitt 14 des Schwebekörpers 3 auf dem Ventilsitz 5. Außerdem bildet der äußere Teilabschnitt 14 einen Zusatz-Ventilsitz 16 (siehe zum Beispiel Figur 2), auf dem der innere Teilabschnitt 15 in Schließposition aufliegt. Wird die zugehörige Verbrennungseinrichtung im Teillast-Betrieb betrieben, so hebt beispielsweise der innere bzw. nächstkleinere Teilabschnitt 15 von seinem Zusatz-Ventilsitz 16 ab und gibt die Abgasleitung zum Teil bzw. partiell frei. Die Position des inneren Teilabschnitts 15 stellt sich hierbei auf die abzuführende Abgasmenge ein. Steigt die Abgasmenge weiter an, wie es bei Volllast-Betrieb der Verbrennungseinrichtung der Fall ist, so verlässt auch der äußere Teilabschnitt 14 des Schwebekörpers 3 seinen Ventilsitz 5 und gibt den maximalen Durchlassquerschnitt der Rückströmsperre 1 frei, wie beispielhaft unter anderem in Figur 8 gezeigt ist. Aus den Figuren 2 und 8 ist ferner zu erkennen, dass der innere Teilabschnitt 15 des Schwebekörpers 3 einen stromaufwärts, also nach unten, gerichteten Ansatz 17 trägt, der teleskopartig in einen ebenfalls stromaufwärts gerichteten Ansatz 18 des äußeren Teilabschnitts 14 eingreift. Der Ansatz 18 des äußeren Teilabschnitts 14 ist über radiale Stege 19 (siehe zum Beispiel Figuren 3 und 9) und eine hülsenförmige Führung bzw. Führungshülse 20 fest mit dem Auftriebskörper 4 verbunden. Der hülsenförmig ausgebildete Ansatz 18 des äußeren Teilabschnitts 14 bildet in seinem oberen Bereich eine Führung für den zapfenförmigen Ansatz 17 des inneren Teilabschnitts 15. Dabei tragen die Ansätze 17 und 18 an ihrem unteren Ende jeweils einen Anschlag, der mit einem komplementären Anschlag zusammenwirkt. Auf diese Weise wird die Aufwärtsbewegung der Teilabschnitte 14 und 15 relativ zum Rohrkörper 2 bzw. zum Auftriebskörper 4 begrenzt. Mit anderen Worten weist der Schwebekörper 3 den sich in axialer Richtung 21 erstreckenden Ansatz 18 auf, wobei die Führungshülse 20 radial innen im Auftriebskörper 4 ausgebildet ist und wobei der Schwebekörper 3 mittels der Führungshülse 20 in axialer Richtung 21 bewegbar geführt ist. Die Rückströmsperre 1 mit dem zweistufig ausgeführten Schwebekörper 3 eignet sich für Verbrennungseinrichtungen hoher Leistung unter gleichzeitiger Beherrschung des Teillast-Bereichs. Der Fachmann wird erkennen, dass der Schwebekörper 3 auch einteilig oder mit mehr als zwei Teilen ausführbar ist.

Wie den Figuren 1 und 2 ferner zu entnehmen ist, umfasst die Rückströmsperre 1 in dem dargestellten Ausführungsbeispiel ferner ein ringförmiges Dichtungselement 23, welches in einer umlaufenden und an dem Auftriebskörper 4 ausgebildeten Nut fixiert ist, und einen Dichtring 24, der an einem Längsende des Rohrkörpers 2 eingelegt ist und von einem an dem Rohrkörper 2 lösbar befestigbaren Muffenring 25 an dem Rohrkörper 2 befestigt ist. Der Dichtring 24 dient dazu, die Umfangsrinne 7 vertikal größtmöglich abzuschirmen und vertikal stromaufwärts fließendes Kondensat in die Umfangsrinne 7 zu leiten.

Der rohrförmig ausgebildete Auftriebskörper 4 ist in einer Einzelteildarstellung in Figur 7 gezeigt. Im zusammengebauten Zustand der Rückströmsperre 1 ist der Auftriebskörper 4 zwischen dem radial inneren Umfangswandabschnitt 8 und dem radial äußeren Umfangswandabschnitt 9 und zumindest abschnittsweise innerhalb der Umfangsrinne 7 angeordnet. Der rohrförmig ausgebildete Auftriebskörper 4 ist konzentrisch um den radial inneren Umfangswandabschnitt 8 herum angeordnet, wobei der Auftriebskörper 4 zwischen einer Auftriebs-Position (siehe zum Beispiel Figuren 5 und 8) und einer Sperr-Position (siehe zum Beispiel Figuren 4 und 9) in einer axialen Richtung 21 (siehe zum Beispiel Figur 3) parallel zum radial inneren Umfangswandabschnitt 8 bewegbar ausgebildet ist. Der Auftriebskörper 4 ist sowohl in der Auftriebs-Position als auch in der Sperr-Position beabstandet zu dem Bodenwandabschnitt 10 angeordnet, wobei der Abstand zwischen dem Auftriebskörper 4 und dem Bodenwandabschnitt 10 in der Auftriebs-Position größer ist als in der Sperr-Position. Rückhaltearme 28 führen dabei die Bewegung des Auftriebskörpers 4 zwischen der Auftriebs-Position und der Sperr-Position, wobei die Rückhaltearme 28 an dem radial inneren Umfangswandabschnitt 8 ausgebildet sind. Die Rückhaltearme 28 blockieren darüber hinaus eine Bewegung des Auftriebskörpers 4 über die Auftriebs-Position hinaus, so dass die Auftriebs-Position die maximal stromabwärts erreichbare Steighöhe des Auftriebskörpers 4 definiert.

In der Auftriebs-Position, aber auch in Zwischen-Positionen bis zum Erreichen der Sperr-Position, bildet der Auftriebskörper 4 zwischen sich und dem Mündungsumfangsrand 12 einen umlaufenden Durchlassspalt 22 (siehe zum Beispiel Figuren 5 und 8) aus. Der Durchlassspalt 22 verbindet dabei die Umfangsrinne 7 mit dem Gasführungskanal 11, so dass überschüssiges Fluid aus der Umfangsrinne 7 in den Gasführungskanal 11 abgeleitet werden kann. Hierzu ist es zweckmäßig, dass sich in axialer Richtung 21 von dem Bodenwandabschnitt 10 aus betrachtet der radial äußere Umfangswandabschnitt 9 über den radial inneren Umfangswandabschnitt 8 hinaus erstreckt. Mit anderen Worten weist der radial äußere Umfangswandabschnitt 9 eine größere Längserstreckung als der radial innere Umfangswandabschnitt 8 auf. In der Sperr-Position verschließt der Auftriebskörper 4 den Durchlassspalt 22, so dass kein Fluid aus der Umfangsrinne 7 herausgedrückt und über den Durchlassspalt 22 abgeführt werden kann.

Zur Sicherstellung der Sperrwirkung ist an dem Auftriebskörper 4 innenseitig ein Umfangssperransatz 26 ausgebildet, welcher sich radial nach innen erstreckt. Der Umfangssperransatz 26 ist über das Dichtungselement 23 in der in den Figuren 4 und 9 gezeigten Sperr-Position auf dem Mündungsumfangsrand 12 aufliegend angeordnet, so dass kein Durchlassspalt 22 ausgebildet ist, durch welchen Fluid oder sogar stromaufwärts strömendes Gas aus der Umfangsrinne 7 in den Gasführungskanal 11 gelangen könnte. Ferner ist an dem Auftriebskörper 4 ein sich in axialer Richtung 21 erstreckender Umfangssitz 27 ausgebildet. Der Umfangssitz 27 ist bei dem dargestellten Ausführungsbeispiel gleichzeitig der Ventilsitz 5, so dass die Erfindung unter anderem durch einen in axialer Richtung 21 bewegbar innerhalb des Rohrkörpers 2 angeordneten Ventilsitz 5 charakterisiert ist.

Die in Figur 8 gezeigte Auftriebs-Position des Auftriebskörpers 4 stellt die maximal erreichbare Auftriebshöhe bzw. Steighöhe für den Auftriebskörper 4 dar. Die Rückhaltearme 28, die an dem radial inneren Umfangswandabschnitt 8 ausgebildet sind, sorgen dafür, dass eine Bewegung des Auftriebskörpers 4 aus der Sperr-Position heraus in axialer Richtung 21 über die Auftriebs-Position hinaus blockiert ist, wobei in der Auftriebs-Position (siehe zum Beispiel Figur 8) der Umfangssperransatz 26 an den hakenförmig ausgebildeten und sich radial nach innen erstreckenden Rückhaltearmen 28 anliegt, so dass eine weitere Bewegung des Auftriebskörpers 4 über die Auftriebs-Position hinaus blockiert ist. Wenn der Auftriebskörper 4 in einer aus der Sperr-Position herausbewegten Position oder in der Auftriebs-Position angeordnet ist, bildet der Umfangssitz 27 zwischen sich und dem Mündungsumfangsrand 12 den umlaufenden Durchlassspalt 22 aus, durch den dann gegebenenfalls Fluid aus der Umfangsrinne 7 in den Gasführungskanal 11 gelangen kann und über den Gasführungskanal 11 abgeführt wird.

Zur Realisierung einer Bewegung des Auftriebskörpers 4 zwischen der Sperr-Position und der Auftriebs-Position weist der der Auftriebskörper 4 eine Auftriebseinrichtung 29 auf. Die Auftriebseinrichtung 29 erzeugt bei einem in der Umfangsrinne 7 befindlichen Fluid für den Auftriebskörper 4 eine in Richtung der Auftriebs-Position wirkende Kraft, so dass der Auftriebskörper 4 in der Umfangsrinne 7 in Abhängigkeit der Füllhöhe der Flüssigkeit innerhalb der Umfangsrinne 7 und/oder in Abhängigkeit des vorherrschenden Betriebszustandes eine entsprechende Position in axialer Richtung 21 einnimmt. Wie aus Figur 7 zu erkennen ist, weist der Auftriebskörper 4 eine radial innere Umfangswandung 30 und eine radial äußere Umfangswandung 31 auf, die sich jeweils in axialer Richtung 21 erstrecken und an ihren mit Bezug auf den eingebauten Zustand stromabwärts liegenden Längsenden miteinander verbunden sind. Dabei ist die Auftriebseinrichtung 29 als eine zwischen der radial inneren Umfangswandung 30 und der radial äußeren Umfangswandung 31 ausgebildete und Luft beinhaltende Auftriebskammer 32 ausgebildet.

Obgleich die Funktionsweise der erfindungsgemäßen Rückströmsperre 1 aus der vorstehenden Beschreibung verständlich ist, werden nachstehend die beiden Extrem-Positionen der Rückströmsperre 1 mit Bezug auf die Figuren 4, 5, 8 und 9 nochmals kurz beschrieben.

Die Figuren 5 und 8 zeigen einen Volllast-Betrieb der Verbrennungseinrichtung, bei welchem der Schwebekörper 3 der Rückströmsperre 1 einen maximalen Durchlassquerschnitt freigibt, so dass Abgas aus dem Gasführungskanal 11 stromabwärts (siehe Pfeil 6 in Figur 8) strömen kann. Dabei sind beide Teilabschnitte 14 und 15 des Schwebekörpers 3 maximal stromabwärts in axialer Richtung 21 bewegt angeordnet. Zusätzlich ist auch der Auftriebskörper 4 maximal stromabwärts in axialer Richtung 21 bewegt angeordnet, wobei die Rückhaltearme 28 den Auftriebskörper 4 in der Auftriebs-Position zurückhalten und eine über die Auftriebs-Position hinausgehende Position des Auftriebskörpers 4 blockieren. Der Auftriebskörper 4 wird im Volllast-Betrieb unabhängig davon, welche Füllhöhe an Flüssigkeit in der Umfangsrinne 7 vorliegt oder ob die Umfangsrinne 7 trocken und ohne Flüssigkeit ist, von dem Schwebekörper 3 stromabwärts in Richtung des Pfeils 6 in Figur 8 in die Auftriebs-Position gezogen, wenn das stromabwärts strömende Gas den Schwebekörper 3 anhebt. Dabei führt eine Führungsfläche 36 die stromabwärts gerichtete Bewegung des Umfangssperransatzes 26 des Auftriebskörpers 4, wobei eine solche Führungsfläche 36 an jedem Rückhaltearm 28 ausgebildet ist und sich bis zu einem Rückhaltevorsprung 37 erstreckt, der endseitig an jedem Rückhaltearm 28 ausgebildet ist. In der Auftriebs-Position liegt der Umfangssperransatz 26 des Auftriebskörpers 4 dementsprechend an den radial nach außen hervorstehenden Rückhaltevorsprüngen 37 der Rückhaltearme 28 an, so dass eine weitere Bewegung des Auftriebskörpers 4 stromabwärts von dem Rückhaltearm 28 blockiert ist, wie es exemplarisch in der Detailansicht der Figur 8 für einen Rückhaltearm 28 gezeigt ist.

Die Figuren 4 und 9 zeigen einen Sperrbetrieb für die erfindungsgemäße Rückströmsperre 1, bei welchem ein Druck stromaufwärts (siehe Pfeil 38 in Figur 9) wirkt, wodurch der Schwebekörper 3 auf den Ventilsitz 5 gedrückt angeordnet ist. Der Schwebekörper 3 drückt damit den Auftriebskörper 4 derart stromaufwärts (siehe Pfeil 38 in Figur 9), dass der Auftriebskörper 4 den Durchlassspalt 22 verschließt, indem der Umfangssperransatz 26 auf dem Mündungsumfangsrand 12 dichtend aufliegt. Auf diese Weise ist sichergestellt, dass weder stromaufwärts strömendes Gas noch Fluid aus der Umfangsrinne 7 in den Gasführungskanal 11 gelangt.

Wie schließlich beispielsweise aus den Figuren 2 und 9 ersichtlich ist, ist der radial äußere Umfangswandabschnitt 9 als eine Außenumfangswand 33 des Rohrkörpers 2 ausgebildet. In der Außenumfangswand 33 ist eine verschließbare Durchgangsöffnung 34 ausgebildet, die zu Wartungszwecken bei beispielsweise einer Spülung der Rückströmsperre 1 als Ablauf dient und die bei dem gezeigten Ausführungsbeispiel mit einer Rändelschraube 35 verschlossen ist. Die Durchgangsöffnung 34 steht dabei in Verbindung mit der Umfangsrinne 7.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Rückströmsperre (1) für eine Abgasleitung einer Verbrennungseinrichtung, wobei die Rückströmsperre (1) einen in einem vertikalen Abschnitt der Abgasleitung einbaubaren Rohrkörper (2), einen Schwebekörper (3), einen innen im Rohrkörper (2) angeordneten Ventilsitz (5) für den durch vertikal aufwärts strömendes Gas von dem Ventilsitz (5) abhebbar ausgebildeten Schwebekörper (3) und eine radial innen im Rohrkörper (2) angeordnete Umfangsrinne (7) aufweist, die von einem radial inneren Umfangswandabschnitt (8), einem radial äußeren Umfangswandabschnitt (9) und einem Bodenwandabschnitt (10) begrenzt ist, wobei der radial innere Umfangswandabschnitt (8) und der Bodenwandabschnitt (10) innen im Rohrkörper (2) ausgebildet sind und wobei der radial innere Umfangswandabschnitt (8) zumindest als ein Abschnitt eines sich in Richtung des Schwebekörpers (3) erstreckenden Gasführungskanals (11) mit einem Mündungsumfangsrand (12) ausgebildet ist,
**dadurch gekennzeichnet, dass**
zwischen dem radial inneren Umfangswandabschnitt (8) und dem radial äußeren Umfangswandabschnitt (9) ein rohrförmig ausgebildeter und den Ventilsitz (5) ausbildender Auftriebskörper (4) angeordnet ist, der zwischen einer Auftriebs-Position, in welcher der Auftriebskörper (4) zwischen sich und dem Mündungsumfangsrand (12) einen umlaufenden und die Umfangsrinne (7) mit dem Gasführungskanal (11) verbindenden Durchlassspalt (22) ausbildet, und einer den Durchlassspalt (22) verschließenden Sperr-Position in einer axialen Richtung (21) parallel zum radial inneren Umfangswandabschnitt (8) bewegbar ausgebildet ist.

2. Rückströmsperre (1) nach Anspruch 1, **dadurch gekennzeichnet, dass** an dem Auftriebskörper (4) innenseitig ein sich radial nach innen erstreckender Umfangssperransatz (26) ausgebildet ist, welcher in der Sperr-Position auf dem Mündungsumfangsrand (12) aufliegend angeordnet ist.

3. Rückströmsperre (1) nach Anspruch 2, **dadurch gekennzeichnet, dass** an dem radial inneren Umfangswandabschnitt (8) wenigstens ein Rückhaltearm (28) ausgebildet ist, welcher sich radial nach innen erstreckt und eine Bewegung des Auftriebskörpers (4) aus der Sperr-Position heraus in axialer Richtung (21) über die Auftriebs-Position hinaus blockiert.

4. Rückströmsperre (1) nach Anspruch 1, **dadurch gekennzeichnet, dass** an dem Auftriebskörper (4) ein sich in axialer Richtung (21) erstreckender Umfangssitz (27) ausgebildet ist, welcher der Ventilsitz (5) ist, wobei in der Auftriebs-Position der Umfangssitz (27) zwischen sich und dem Mündungsumfangsrand (12) den umlaufenden Durchlassspalt (22) zwischen der Umfangsrinne (7) und dem Gasführungskanal (11) ausbildet.

5. Rückströmsperre (1) nach Anspruch 1, **dadurch gekennzeichnet, dass** der Auftriebskörper (4) eine Auftriebseinrichtung (29) aufweist, welche bei einem in der Umfangsrinne (7) befindlichen Fluid für den Auftriebskörper (4) eine in Richtung der Auftriebs-Position wirkende Kraft erzeugend ausgebildet ist.

6. Rückströmsperre (1) nach Anspruch 5, **dadurch gekennzeichnet, dass** der Auftriebskörper (4) eine radial innere Umfangswandung (30) und eine radial äußere Umfangswandung (31) aufweist, wobei die Auftriebseinrichtung (29) als eine zwischen der radial inneren Umfangswandung (30) und der radial äußeren Umfangswandung (31) ausgebildete Auftriebskammer (32) ausgebildet ist.

7. Rückströmsperre (1) nach Anspruch 1, **dadurch gekennzeichnet, dass** sich in axialer Richtung (21) von dem Bodenwandabschnitt (10) aus betrachtet der radial äußere Umfangswandabschnitt (9) über den radial inneren Umfangswandabschnitt (8) hinaus erstreckt.

8. Rückströmsperre (1) nach Anspruch 1, **dadurch gekennzeichnet, dass** der Schwebekörper (3) einen sich in axialer Richtung (21) erstreckenden Ansatz (18) aufweist, wobei innen im Auftriebskörper (4) eine Führungshülse (20) ausgebildet ist, in welcher der Schwebekörper (3) in axialer Richtung (21) bewegbar geführt ist.

9. Rückströmsperre (1) nach Anspruch 1, **dadurch gekennzeichnet, dass** der radial äußere Umfangswandabschnitt (9) als eine Außenumfangswand (33) des Rohrkörpers (2) ausgebildet ist, wobei die Außenumfangswand (33) eine verschließbar ausgebildete Durchgangsöffnung (34) aufweist.

10. Rückströmsperre (1) nach Anspruch 1, **dadurch gekennzeichnet, dass** der Schwebekörper (3) wenigstens einen ringförmig ausgebildeten Teilabschnitt (14) und wenigstens einen tellerförmig ausgebildeten Teilabschnitt (15) aufweist, wobei jeder nächst-größere Teilabschnitt (14) einen Zusatz-Ventilsitz (16) für den nächst-kleineren Teilabschnitt (15) bildet.
